# EUROPEAN PATENT SPECIFICATION

(11) **EP 0 924 280 B1**
(45) Date of publication and mention of the grant of the patent: **11.08.2004**
(21) Application number: 97830672.8
(22) Date of filing: 15.12.1997
(51) Int. Cl.: C09J 161/00, B27G 11/00

(54) **Thermosetting adhesive composition based on condensed tannins and use thereof in the wood industry**
Warmehärtbare Klebstoffe aus kondensierten Tanninen und Verwendung in der Holzindustrie
Composition adhésive thermodurcissable à base des tannins condensés et son utilisation dans l'industrie du bois

(43) Date of publication of application: 23.06.1999
(73) Proprietor: Silva S.r.l., 12087 Pamparato (Cuneo) (IT)
(72) Inventor: Trosa, Alessandro, 12080 San Michele Mondovi' (Cuneo) (IT)
(74) Representative: Rambelli, Paolo

(56) References cited:
- EP-A- 0 699 510
- US-A- 4 174 980
- US-A- 5 200 447
- DATABASE WPI Section Ch, Week 7932 Derwent Publications Ltd., London, GB; Class A21, AN 79-58743B XP002064852 & JP 54 080 340 A (AGENCY OF IND SCI & TECHNOLOGY)
- DATABASE WPI Section Ch, Week 7630 Derwent Publications Ltd., London, GB; Class A11, AN 76-56861X XP002064853 & JP 51 067 334 A (HOHNEN OIL KK)
- DATABASE WPI Section Ch, Week 8001 Derwent Publications Ltd., London, GB; Class A21, AN 80-00919C XP002064854 & JP 54 148 697 A (HOHNEN OIL KK)
- DATABASE WPI Section Ch, Week 8542 Derwent Publications Ltd., London, GB; Class A21, AN 85-259677 XP002064855 & JP 60 173 074 A (SHOEI KAGAKU KOGYO KK)

## Description

The present invention relates to a thermosetting adhesive composition based on condensed tannins which is particularly suitable for use as a glue for the production of wood-based materials in the timber industry.

The use of natural tannins as bases for glues for the timber industry has been known for some time and is reported in the literature (J. Macromol. Sci. Chem. A16 (7), 1243-1250 [1981]). Tannin glues are used in competition with phenol-formaldehyde (PF), urea-formaldehyde (UF), melamine-urea-formaldehyde (MUF) and polyurethane (PMDI) resins.

Natural tannins are divided into two large classes: hydrolysable tannins and condensed tannins. Only condensed tannins are suitable for use as glues.

Within the scope of the present invention, tannins coming from four different plant species are taken into consideration:
- mimosa (*acacia mearnsii, acacia mollissima*),
- quebracho (*schinopsis lorentzii, schinopsis balancae*),
- pine (*pinus radiata, pinus* Douglas Fir and other species), and
- pecan (*carya illinoensis*);
the invention is not, however, intended to be limited to tannins coming from the above-mentioned plant species.

For the most part (70-80%), these plant extracts are constituted by prepolymers the basic unit of which is flavan-3-ol. The various species mentioned above are distinguished according to the positions and numbers of OH groups present on the resorcinol A ring and on the catechol B ring. These prepolymers have average molecular weights of between 1000 and 3000 and are stable in concentrated aqueous solution by virtue of colloidal phenomena. The remaining 20-30% is constituted by hexose and pentose sugars resulting from partial hydrolysis of hemicellulose.

Extensive teaching and documentation relating to wood adhesives based on fanning is given in the texts Advanced Wood Adhesives Technology, Vol. 1 (1983) and Vol. 2 (1989) by Antonio Pizzi, published by Marcel Dekker, Inc., New York. Conventional tannin glue technology is based on rapid polymerization of the natural tannin in an alkaline medium by means of formaldehyde in the form of solid paraformaldehyde suspended in the solution, of formalin (aqueous solution of formaldehyde), or of hexamethylene-tetramine (formaldehyde-ammonia adducts). These systems are two-component systems since the hardener (such as those mentioned above) is added at the time of use or is mixed separately with the wood particles.

The use of paraformaldehyde or of formaldehyde in solution produces highly water-resistant products with formaldehyde emission in line with European standards (E1 type emission). The main problem is the difficulty in handling the formaldehyde in the aforementioned forms since it is a hazardous substance with consequent safety problems for users.

EP-A-0 648 807 describes tannin-based adhesive agents which use compounds with weak acid reactions such as silica and boric acid as hardeners. These adhesive compositions are characterized by a low formaldehyde emission value.

US-A-4 174 980 discloses compositions including vegetable tannins and melamine - for maldehyde resins. Monomeric, dimeric and higher order resins are suitable.

There is, however, a need to provide new tannin-based adhesive compositions which, as well as having low formaldehyde emission values, also have improved mechanical properties and bulking in water and stability characteristics. The invention therefore proposes the provision of novel glue compositions based on condensed tannins which use alternative and innovative hardening systems.

This object is achieved by virtue of the presence, as hardeners, of methylolated compounds alone or, preferably, in combination with Lewis acids.

In particular, a subject of the invention is a thermosetting adhesive composition based on condensed tannins, characterized in that it comprises one or more hardening agents selected from the group which consists of:
A) products of the reaction of a nitroparaffin with formaldehyde in an alkaline medium, of the general formula: 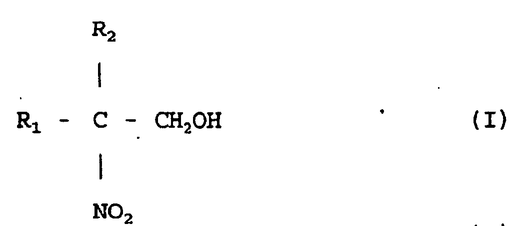 in which R₁ and R₂ are selected, independently of one another, from C₁-C₄ alkyl and C₁-C₄ hydroxyalkyl groups, and mixtures of these compounds;
B) water-miscible products obtained from condensation of urea-formaldehyde and melamine-formaldehyde in the presence of a C₁-C₄ alkanolamine with degrees of polymerization no greater than 4;
C) products of the reaction of formaldehyde, in a basic medium, with urea-carbohydrate adducts, the adducts being products of the reaction of urea with a carbohydrate in an anhydrous medium, in the fused state; and
D) mixtures of the aforesaid agents A), B) and/or C).

The methylolated compounds of type A) preferably comprise tri(hydroxymethyl)nitromethane (identified as TN below) which is the product of the reaction of nitromethane with three molecules of formaldehyde in an alkaline medium (electrophilic substitution of hydrogen by formaldehyde).

The reaction between the nitroparaffin and formaldehyde which leads to the production of the methylolated compounds of formula (I) takes place at ambient temperature with an alkaline pH. For this reason, the compounds of formula (I) can also be formed in situ by mixing of the tannin glue mixture comprising the corresponding nitroparaffin with a source of formaldehyde, preferably formaldehyde in aqueous solution.

The scope of the invention therefore includes adhesive compositions based on condensed tannins including a nitroparaffin or mixtures of nitroparaffins which are intended to be mixed with a source of formaldehyde at the time of use to form methylolated compounds of formula (I) in situ.

The condensation products B) preferably comprise dimethylolurea and trimethylolmelamine and their oligomers; naturally mixtures comprising the aforesaid monomers and their oligomers may be used. The degree of polymerization is preferably limited to the dimer and to the trimer which may be used mixed with the monomer.

The characteristics of stability and reactivity of the aforementioned condensation products are modified by the introduction, at the condensation stage, of an alkanolamine having from 1 to 4 carbon atoms, preferably ethanolamine, in percentages of up to 40% by weight relative to the urea or relative to the melamine.

Condensation in the presence of alkanolamine brings about the formation of oxazolidine and dimethylolurea/oxazolidine which are characterized by greater stability and reactivity with respect to tannin.

These products may be further modified by the addition of bisulphite. Bisulphitation confers greater stability in an acid medium but does not per se improve reactivity with respect to tannin.

Unlike commercial UF and MUF resins, the type B precondensates described herein, which are based on urea, melamine, formaldehyde and possibly alkanolamine, are fully miscible with water and are relatively stable even in neutral and acid media and their compatibility with tannin is unlimited.

Although some conventional techniques for the use of tannin provide for the introduction of UF resin into the adhesive mixture, these are in any case small percentages (5-10% by weight) which are added to the tannin/paraformaldehyde system in order to strengthen the polymer. Conventional UF and MUF resins cannot be used as hardeners for tannin glues for three basic reasons:
- they are not sufficiently reactive in an alkaline medium;
- they are barely soluble in an aqueous medium;
- quantities greater than 20-30% cause precipitation of complexes with tannin.

The type B condensation products are preferably used in quantities of from 15 to 30% by weight or, preferably, between 20 and 30% by weight relative to the anhydrous tannin. These compounds are advantageously used as hardeners in combination with type A compounds, particularly with TN; in this case, the preferred concentrations are from 10 to 15% w/w of compound B and from 5 to 10% w/w of compound A, relative to the anhydrous tannin.

The type C reaction products are formed by the preliminary reaction of urea with carbohydrates, preferably selected from glucose, xylose and molasses, or even complexes, in an anhydrous medium at a temperature of 130-150°C, for a few hours, in the fused state. Partial dehydration of the carbohydrate takes place with the formation of precursors of furan products which react with the urea by amide-type bonds. This water-soluble and still barely reactive urea-carbohydrate adduct is then methylolated by reaction with formaldehyde in a basic medium. A preferred type C compound is dimethyloldiglycosylurea.

The methylolated hardeners A), B) or C) are generally used in quantities of from 10 to 50% by weight relative to the dry tannin.

These methylolated compounds can give polycondensation reactions with condensed tannins in an alkaline medium. It is thought that the methylol groups react in positions 6 and 8 of the A ring of the monomeric unit of tannin.

It has been found that the thermosetting effect with the formation of a strong three-dimensional lattice finds a synergic effect if it is associated with the autocondensation promoted by Lewis acids. If used alone, on the other hand, the autocondensation mechanism catalyzed by the Lewis acids gives poor-quality results. If the same mechanism is associated with polycondensation, however, a polymer with a large molecular weight, capable of producing products with optimal water-resistance is obtained.

The Lewis acids used are preferably silica in the form of silicates (for example, tetrasodium silicate) and boric acid in the form of borates (for example, trisodium borate).

The synergic effect of silica and other Lewis acids with trihydroxymethylnitromethane (and the other methylolated compounds) can be explained by the simultaneous polycondensation reactions (which affect the A ring) and autocondensation reactions (which affect the C ring). The two mechanisms acting simultaneously at different active sites give rise to a lattice which is highly cross-linked at the three-dimensional level and is completely insoluble. The good water-resistance and optimal adhesive capacity is explained precisely by the very high molecular weight. Unlike the carbon-nitrogen bonds present in amino-plastic resins, the carbon-carbon bonds produced by these reactions are not susceptible to hydrolysis in an aqueous medium.

In the case of tannin-based glues, however, better or poorer water resistance depends on the solubility of the thermosetting polymer which is a function of the molecular weight and of the three-dimensionality of the lattice. Autocondensation alone cannot produce sufficiently large molecular weights.

Synergic effects are not observed in paraformaldehyde/silica systems since highly electrophilic and reactive products such as formaldehyde (in its various forms) almost completely repress autocondensation.

The above-mentioned Lewis acid compounds are normally added to the adhesive composition in quantities of from 2 to 10% by weight, preferably from 2 to 8% by weight relative to the anhydrous tannin.

The adhesive compositions of the invention can be used for a large range of products in the timber industry, particularly for the production of chipboard panels, fibreboard panels (MDF), plywood, mouldings, and laminates. The main advantages achieved by the invention in comparison with more conventional systems, both from the point of view of industrial application and from the point of view of the finished product, are as follows:
- the use of resins with a low environmental impact at an industrial level of production (press fumes, water discharge, storage of products);
- the production of panels with formaldehyde emission equal to that of natural wood;
- greater stability of the tannin/activator mixtures at various pH values and, by virtue of the improved stability, the possibility, in the case of TN, of formulating single-component tannin and hardener compositions;
- complete compatibility and miscibility with precondensed methylolates, in contrast with commercial UR and MUF resins.

Chipboard and fibreboard panels produced by the technology of the invention are characterized by optimal water resistance (type V100 panels - DIN-EN conditioning) low values for bulking in water and an absence of free formaldehyde.

Table 1 below gives typical values of formaldehyde emission from panels in accordance with the ISO-EN 120 standard (perforator method) according to the type of glue used.

**TABLE 1**

| TYPE OF RESIN | TYPICAL EMISSION VALUE mg HCHO/100 g panel |
|---|---|
| urea-formaldehyde | 6-10 |
| melamine-urea-formaldehyde | 8-12 |
| phenol-formaldehyde | 3-6 |
| tannin-formaldehyde | 3-6 |
| tannin-TN-silica | 0.3-0.5 |
| tannin-dimethylolurea-silica | 0.4-0.6 |
| wood alone | 0.3-0.5 |

Tables 2a and 2b give the stability values for various hardener systems for quebracho tannin and for mimosa tannin, respectively, at various pH values and for various quantities of hardener relative to the dry tannin. The same tables give comparative values relating to compositions comprising conventional hardeners constituted by paraformaldehyde or formaldehyde.

The stability value given should be understood as the time for which a solution containing 40% by weight of dry tannin, activated by the hardener, maintains a viscosity of less than 1000 cP (Brookfield method - LV2 Probe, 30 rpm) without thixotropic or rheopectic effects.

The stability values given confirm that it is possible to use single-component formulations, particularly in the case of the TN hardener, with acid pH values (pH3-6).

**TABLE 2a**

| Stability of various hardener systems for quebracho tannin | | | |
|---|---|---|---|
| Type of hardener | Quantity (% relative to dry tannin) | pH | Stability at 25°C |
| | 12 | 4 | 60 days |
| TN | 12 | 6 | 40 days |
| TN | 12 | 10 | 24 hours |
| dimethylolurea/ethanolamine | 25 | 4 | 22 hours |
| dimethylolurea/ethanolamine | 25 | 6 | 48 hours |
| dimethylolurea/ethanolamine | 25 | 10 | 16 hours |
| paraformaldehyde | 8 | 4 | 8 hours |
| paraformaldehyde | 8 | 6 | 6 hours |
| paraformaldehyde | 8 | 10 | 40 mins. |
| formaldehyde | 8 | 4 | 6 hours |
| formaldehyde | 8 | 6 | 3 hours |
| formaldehyde | 8 | 10 | 25 mins. |

**TABLE 2b**

| Stability of various hardener systems for mimosa tannin | | | |
|---|---|---|---|
| Type of hardener | Quantity (% relative to dry tannin) | pH | Stability at 25°C(*) |
| TN | 12 | 4 | 40 days |
| TN | 12 | 6 | 30 days |
| TN | 12 | 10 | 24 hours |
| dimethylolurea/ethanolamine | 25 | 4 | 22 hours |
| dimethylolurea/ethanolamine | 25 | 6 | 40 hours |
| dimethylolurea/ethanolamine | 25 | 10 | 12 hours |
| paraformaldehyde | 8 | 4 | 6 hours |
| paraformaldehyde | 8 | 6 | 4 hours |
| paraformaldehyde | 8 | 10 | 32 mins. |
| formaldehyde | 8 | 4 | 5 hours |
| formaldehyde | 8 | 6 | 2.5 hours |
| formaldehyde | 8 | 10 | 20 mins. |

The following examples relate to laboratory tests of use, in which the glue compositions according to the invention and commercial glues based on PF, UF, MUF and based on tannin were used for gluing plywood and chipboard panels.

### a - Production of chipboard panels

### General operative conditions

Thickness: 10 (± 0.5) mm
Density: 700 (± 20)
Quantity of glue: 12% by weight of dry glue on dry wood
Temperature of press surfaces: 170°C
Maximum pressure: 30 kg/cm²

The characteristics of chipboard panels produced by conventional systems, by way of reference data, and of the chipboard panels produced by the gluing systems according to the invention, are given in Tables 3 and 4 below.

The percentages are expressed by weight unless indicated otherwise. The percentages of hardener are always expressed as percentages by weight relative to the anhydrous tannin.

### b - Production of plywood

### General operative conditions

Veneers: 30x30 cm of poplar and of beech, thickness 2.0 mm
Number of layers: 5
Temperature of press surfaces: 120°C
Maximum pressure: 8 kg/cm²
Quantity of glue: 120 g/m² per individual glue line
Filler: coconut flour, 10% relative to the dry glue.

The plywood produced with various types of tannin glue according to the invention were examined in accordance with ISO EN 314 test, Class 3 and the breaking load results are given in Table 5 below.

**TABLE 3**

| Characteristics of chipboard panels produced by conventional systems (reference data) | | | | | |
|---|---|---|---|---|---|
| Gluing system | Press time (s/mm) | Vertical tensile stress DIN-EN (N/mm²) | Vertical tensile stress 2 hours boiling DIN-EN (N/mm²) | Bulking in water 24 hr. -20°C DIN-EN (%) | Emission of formaldehyde DIN-EN 120 (mg HCHO/100g panel) |
| commercial PF resin (1) | 18 | 0.9 | 0.30 | 7 | 3.5 |
| commercial UF resin (2) | 12 | 0.8 | 0 | 16 | 8.4 |
| commercial MUF resin (2) | 12 | 0.8 | 0.22 | 9 | 9.5 |
| quebracho tannin/paraform aldehyde (3) | 15 | 0.8 | 0.20 | 8 | 3.0 |
| tannin/paraform aldehyde (4) | 12 | 0.8 | 0.20 | 8 | 2.5 |
| quebracho tannin/silica (5) | 15 | 0.5 | 0 | 28 | 0.3 |
| quebracho tannin/paraform aldehyde/silica (6) | 15 | 0.8 | 0.20 | 8 | 3.0 |

| | | | | | |
|---|---|---|---|---|---|
| 1 - commercial resin formaldehyde/phenol molar ratio 1.8:1 | | | | | |
| 2 - resin activated with 1.5% of ammonium sulphate | | | | | |
| 3 - tannin in 42% solution, pH 8 activated with 7% of paraformaldehyde | | | | | |
| 4 - tannin in 42% solution, pH 6 activated with 7% of paraformaldehyde | | | | | |
| 5 - tannin in 42% solution, pH 10 activated with 3% of silica | | | | | |
| 6 - tannin in 42% solution, pH 10 activated with 7% of paraformaldehyde and 3% of silica. | | | | | |

**TABLE 4**

| Characteristics of chipboard panels produced by innovative systems | | | | | |
|---|---|---|---|---|---|
| Gluing system | Press time (s/mm) | Vertical tensile stress DIN-EN (N/mm²) | Vertical tensile stress 2 hours boiling DIN-EN (N/mm²) | Bulking in water 24 hr. - 20°C DIN-EN (%) | Emission of formaldehyde DIN-EN 120 (mg HCHO/100g panel) |
| a-1 quebracho/TN/silica | 15 | 0.8 | 0.23 | 8 | 0.3 |
| a-2 quebracho/TN/silica | 15 | 0.7 | 0.14 | 10 | 0.3 |
| b quebracho/TN | 15 | 0.7 | 0 | 15 | 0.3 |
| c mimosa/TN/silica | 14 | 0.8 | 0.21 | 7 | 0.3 |
| d quebracho/dimethylolu rea/ethanolamine/sili ca | 15 | 0.8 | 0.12 | 10 | 0.4 |
| e quebracho/dimethylolu rea/ ethanolamine | 15 | 0.6 | 0 | 16 | 0.4 |
| f quebracho/diglycosyl dimethylolurea/silica | 15 | 0.8 | 0.12 | 11 | 0.4 |
| g quebracho/dimethylolu rea/ethanolamine/sili ca/PF resin | 15 | 0.9 | 0.32 | 6 | 0.6 |
| h quebracho/trimethylol melamine/silica | 15 | 0.8 | 0.15 | 7 | 0.5 |
| j quebracho/TN/dimethyl olurea | 15 | 0.8 | 0.19 | 8 | 0.5 |

| | | | | | |
|---|---|---|---|---|---|
| a-1: quebracho tannin in 42% solution, pH 9.5 activated with 12% of TN and 3% of silica | | | | | |
| a-2: quebracho in 42% solution, pH 9.5 activated with 10% of TN and 3% of silica | | | | | |
| b: quebracho in 42% solution pH 9.5 activated with 12% of TN | | | | | |
| c: mimosa in 50% solution, pH 9.5 activated with 12% of TN and 3% of silica | | | | | |
| d: quebracho in 45% solution, pH 9.5 activated with 30% of dimethylolurea/ethanolamine and 3% of silica | | | | | |
| e: quebracho in 45% solution, pH 9.5 activated with 30% of dimethylolurea/ethanolamine | | | | | |
| f: quebracho in 50% solution, pH 9.5 activated with 30% of diglycosyldimethylolurea | | | | | |
| g: quebracho in 45% solution, pH 9.5 activated with 25% of dimethylolurea/ethanolamine 20% of PF resin and 3% of silica | | | | | |
| h: quebracho in 50% solution, pH 9.5 activated with 30% of trimethylolmelamine and 3% of silica | | | | | |
| j: quebracho in 42% solution, pH 10 activated with 8% of TN and 15% of dimethylolurea. | | | | | |

| Gluing system | Conditioned marine ply ISO EN 314 Class 3 breaking load (N/mm²) |
|---|---|
| k quebracho*/10% TN | 2 |
| l quebracho*/8% TN | 1.7 |
| m quebracho*/6% TN/15% | 1.9 |
| n quebracho*/6% TN | 0.9 |
| p quebracho*/15% dimethylolurea | 0.8 |

| | |
|---|---|
| *In all of the examples, a quebracho tannin in a 42% solution by weight was used. | |

The scope of the invention includes tannin-based glue compositions in single-component form in which the hardener, particularly the TN, is mixed with the condensed tannin, and two-component compositions, in which the hardener is kept separate from the tannin in order to be mixed at the time of use.

A method of gluing woody materials and particularly for producing woody panels with the use of the glue compositions described above also falls within the scope of the invention.

## Claims

1. A thermosetting adhesive composition based on condensed tannins, **characterized in that** it comprises a hardening agent selected from the group which consists of:
A) products of the reaction of a nitroparaffin with formaldehyde in an alkaline medium, of the general formula: 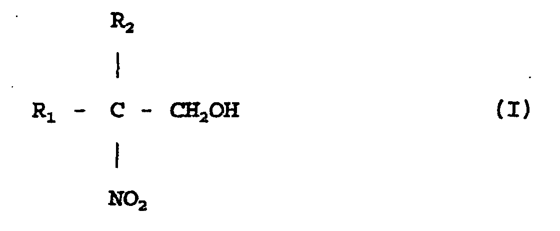 in which R₁ and R₂ are selected, independently of one another, from C₁-C₄ alkyl and C₁-C₄ hydroxyalkyl groups, and mixtures thereof;
B) water-miscible products obtained from condensation of urea-formaldehyde or melamine-formaldehyde in the presence of a C₁-C₄ alkanolamine with degrees of polymerization no greater than 4;
C) products of the reaction of formaldehyde, in a basic medium, with urea-carbohydrate adducts, the adducts being products of the reaction of urea with a carbohydrate in an anhydrous medium, in the fused state, and
D) mixtures of the aforesaid agents A), B) and/or C).

2. A composition according to Claim 1, in which the hardener is of type A and comprises tri(hydroxymethyl)nitromethane.

3. A composition according to Claim 1, including a type B hardening agent in which the alkanolamine is added in quantities of up to 40% by weight relative to the urea or to the melamine.

4. A composition according to Claim 3, in which the alkanolamine is ethanolamine.

5. A composition according to Claim 3 or Claim 4, in which the condensation product comprises oxazolidine and/or dimethylolurea/oxazolidine.

6. A composition according to any one of Claims 3, 4 and 5, in which the condensation product is modified by the addition of bisulphite at the condensation stage.

7. A composition according to Claim 1, in which the hardening agent is of type C and in which the urea-carbohydrate adduct is the product of the reaction of urea with a carbohydrate selected from the group which consists of glucose, xylose, molasses and mixtures thereof.

8. A composition according to Claims 1 to 6, comprising a hardening agent of type A) in combination with an agent of type B.

9. A composition according to Claim 8 comprising from 5 to 10% by weight of compound A and from 10 to 15% by weight of compound B, relative to the anhydrous tannin.

10. A composition according to any one of the preceding claims, comprising a Lewis acid compound.

11. A composition according to Claim 10, in which the Lewis acid is selected from silicates and borates.

12. A composition according to any one of the preceding claims, in which the quantity of hardening agent A), B) or C) added to the tannin is from 10 to 30% by weight relative to the dry tannin.

13. A composition according to Claim 10 or Claim 11 in which the quantity of Lewis acid compound added is from 2 to 10% relative to the anhydrous tannin.

14. A composition according to any one of the preceding claims, in the form of a two-component composition.

15. A composition according to Claim 1 in which the hardening agent is of type A, in the form of a single-component composition.

16. An adhesive composition based on condensed tannins comprising products of the reaction of a nitroparaffin with formaldehyde in an alkaline medium, of the general formula: 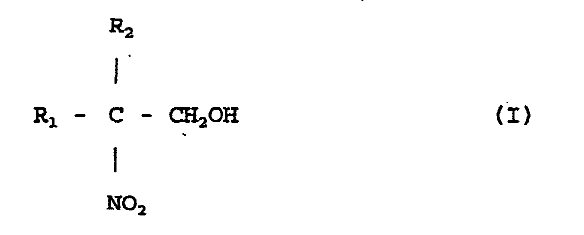 in which R₁ and R₂, independently of one another, are C₁-C₄ alkyl groups.

17. A method of gluing wood-based materials, particularly for producing panels, **characterized in that** a composition according to any one of the preceding claims is used as a gluing composition.

## Patentansprüche

1. Aushärtende Klebstoffzusammensetzung auf der Grundlage kondensierter Tannine, **dadurch gekennzeichnet, dass** diese ein Härtungsmittel umfasst, das aus folgender Gruppe ausgewählt ist:
A) Produkte der Reaktion eines Nitroparaffins mit Formaldehyd in einem alkalischen Medium der allgemeinen Formel: 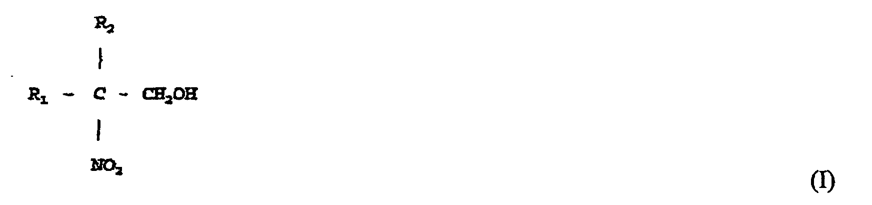 wobei R₁ und R₂ unabhängig voneinander ausgewählt sind aus C₁-C₄ Alkyl und C₁-C₄ Hydroxyalkylgruppen und Mischungen derselben;
B) Wassermischbare Produkte, gewonnen aus der Kondensation von Harnstoffformaldehyd oder Melamin-Formaldehyd in Anwesenheit eines C₁-C₄ Alkanolamins mit Polymerisationsgraden nicht über 4;
C) Produkte der Reaktion von Formaldehyd in einem basischen Medium mit Harnstoff-Kohlenhydrat-Addukten, wobei die Addukte Produkte der Reaktion von Harnstoff mit einem Kohlenhydrat in einem wasserfreien Medium im kondensierten Zustand sind, und
D) Mischungen der genannten Mittel A), B) und/oder C).

2. Zusammensetzung nach Anspruch 1, in welcher der Härter vom Typ A ist und Tri(hydroxymethyl)nitromethan umfasst.

3. Zusammensetzung nach Anspruch 1, welche ein Härtungsmittel vom Typ B umfasst, bei dem das Alkanolamin in Mengen von bis zu 40 Gewichtsprozent im Verhältnis zum Harnstoff oder zum Melamin hinzugefügt wird.

4. Zusammensetzung nach Anspruch 3, in welcher das Alkanolamin Ethanolamin ist.

5. Zusammensetzung nach Anspruch 3 oder Anspruch 4, in welcher das Kondensationsprodukt Oxazolidin und/oder Dimethylolharnstoff/Oxazolidin umfasst.

6. Zusammensetzung nach einem der Ansprüche 3, 4 und 5, in welcher das Kondensationsprodukt durch die Hinzufügung von Hydrogensulfit in der Kondensationsphase modifiziert wird.

7. Zusammensetzung nach Anspruch 1, in welcher das Härtungsmittel vom Typ C ist und das Harnstoff-Kohlenhydrat-Addukt das Produkt der Reaktion von Harnstoff mit einem Kohlenhydrat ist, das aus der Gruppe bestehend aus Glukose, Xylose, Molasse und Mischungen hiervon ausgewählt ist.

8. Zusammensetzung nach Anspruch 1 bis 6, ein Härtungsmittel des Typs A) in Kombination mit einem Mittel des Typs B) umfassend.

9. Zusammensetzung nach Anspruch 8, welche 5 bis 10 Gewichtsprozent der Verbindung A und 10 bis 15 Gewichtsprozent der Verbindung B im Verhältnis zum wasserfreien Tannin umfasst.

10. Zusammensetzung nach einem der vorangehenden Ansprüche, welche eine Lewis-Säure-Verbindung umfasst.

11. Zusammensetzung nach Anspruch 10, in welcher die Lewis-Säure aus Silicaten und Boraten ausgewählt ist.

12. Zusammensetzung nach einem der vorangehenden Ansprüche, in welcher die Menge des dem Tannin hinzugefügten Härtungsmittels A), B) oder C) von 10 bis 30 Gewichtsprozent im Verhältnis zum trockenen Tannin beträgt.

13. Zusammensetzung nach Anspruch 10 oder Anspruch 11, in welcher die Menge der hinzugefügten Lewis-Säuren-Verbindung von 2 bis 10% im Verhältnis zum wasserfreien Tannin beträgt.

14. Zusammensetzung nach einem der vorangehenden Ansprüche in Form einer Zweikomponentenzusammensetzung.

15. Zusammensetzung nach Anspruch 1, in welcher das Härtungsmittel vom Typ A in Form einer Einkomponenten-Zusammensetzung ist.

16. Klebstoffzusammensetzung auf der Grundlage kondensierter Tannine, welche Produkte der Reaktion eines Nitroparaffins mit Formaldehyd in einem alkalischen Medium der folgenden allgemeinen Formel umfasst: 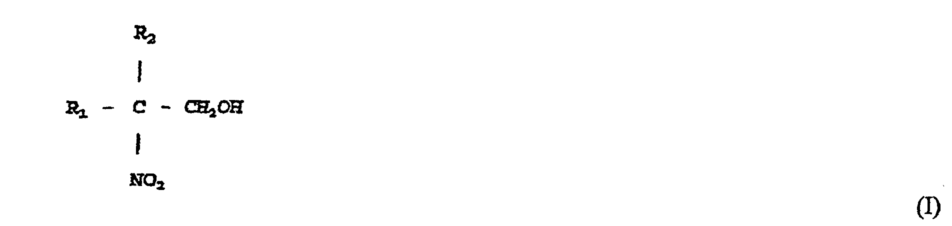 wobei R₁ und R₂ unabhängig voneinander C₁-C₄ Alkylgruppen sind.

17. Verfahren zum Verkleben holzbasierter Materialien, insbesondere in der Produktion von Paneelen, **dadurch gekennzeichnet, dass** eine Zusammensetzung nach einem der vorangehenden Ansprüche als Klebezusammensetzung verwendet wird.

## Revendications

1. Composition adhésive thermodurcissable à base de tanins condensés, **caractérisée en ce qu'**elle comprend un agent durcissant choisi dans le groupe comprenant :
A) des produits de la réaction en milieu alcalin d'une nitroparaffine avec du formaldéhyde, de formule générale (I) : 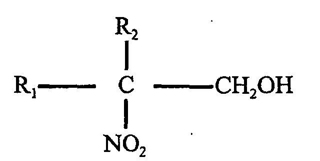 dans laquelle R₁ et R₂ sont choisis indépendamment l'un de l'autre, parmi les groupes alkyle en C₁ - C₄ et hydroxyalkyle en C₁ - C₄ et des mélanges de ceux-ci ;
B) des produits miscibles avec l'eau obtenus par condensation d'urée - formaldéhyde ou de mélamine - formaldéhyde en présence d'une alcanolamine en C₁ - C₄ avec des degrés de polymérisation inférieurs ou égaux à 4 ;
C) des produits de la réaction, en milieu basique, du formaldéhyde avec des adduits hydrate de carbone - urée, les adduits étant des produits de la réaction de l'urée avec un hydrate de carbone en milieu anhydre, à l'état fondu ; et
D) des mélanges des agents A, B et/ou C susdits.

2. Composition selon la revendication 1, dans laquelle le durcisseur est de type A et comprend du tri(hydroxyméthyl)nitrométhane.

3. Composition selon la revendication 1, comprenant un agent durcisseur de type B, dans laquelle l'alcanolamine est ajoutée dans des quantités allant jusqu'à 40 % en poids par rapport à l'urée ou à la mélamine.

4. Composition selon la revendication 3, dans laquelle l'alcanolamine est de l'éthanolamine.

5. Composition selon la revendication 3 ou 4, dans laquelle le produit de condensation comprend de l'oxazolidine et/ou du diméthylolurée/oxazolidine.

6. Composition selon l'une quelconque des revendications 3, 4 ou 5, dans laquelle le produit de condensation est modifié par l'addition de bisulfite lors de l'étape de condensation.

7. Composition selon la revendication 1, dans laquelle l'agent durcisseur est de type C et dans laquelle l'adduit hydrate de carbone - urée est le produit de la réaction de l'urée avec un hydrate de carbone choisi dans le groupe comprenant le glucose, le xylose, les mélasses et des mélanges de ceux-ci.

8. Composition selon les revendications 1 à 6, comprenant un agent durcisseur de type A combiné avec un agent de type B.

9. Composition selon la revendication 8, comprenant de 5 à 10 % en poids de composé A et de 10 à 15 % en poids de composé B par rapport au tanin anhydre.

10. Composition selon l'une quelconque des revendications précédentes, comprenant un composé acide de Lewis.

11. Composition selon la revendication 10, dans laquelle l'acide de Lewis est choisi parmi les silicates et les borates.

12. Composition selon l'une quelconque des revendications précédentes, dans laquelle la quantité d'agent durcisseur A, B ou C ajouté au tanin est de 10 à 30 % en poids par rapport au tanin sec.

13. Composition selon la revendication 10 ou 11, dans laquelle la quantité de composé acide de Lewis ajouté est de 2 à 10 % en poids par rapport au tanin anhydre.

14. Composition selon l'une quelconque des revendications précédentes, sous la forme d'une composition à deux composants.

15. Composition selon la revendication 1, dans laquelle l'agent durcissant est de type A, sous la forme d'une composition à un seul composant.

16. Composition adhésive à base de tanins condensés, comprenant des produits de la réaction en milieu alcalin d'une nitroparaffine avec du formaldéhyde, de formule générale (I) : 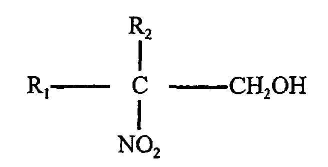 dans laquelle R₁ et R₂ sont, indépendamment l'un de l'autre, des groupes alkyle en C₁ - C₄.

17. Procédé de collage de matériaux à base de bois, en particulier pour produire des panneaux, **caractérisé en ce qu'**une composition selon l'une quelconque des revendications précédentes est utilisée comme composition de collage.
